# EUROPÄISCHE PATENTSCHRIFT

(11) **EP 3 852 946 B1**
(45) Veröffentlichungstag und Bekanntmachung des Hinweises auf die Patenterteilung: **05.03.2025**
(21) Anmeldenummer: 19778443.2
(22) Anmeldetag: 19.09.2019
(51) Int. Cl.: H01F 41/04, B22D 25/02, B21J 5/00, H02K 15/04, B22C 9/22, B22D 13/08

(54) **VERFAHREN UND WERKZEUG ZUM HERSTELLEN EINER SPULE**
METHOD AND TOOL FOR PRODUCING A COIL
PROCÉDÉ ET OUTIL DE FABRICATION D'UNE BOBINE

(30) Priorität: 19.09.2018 DE 102018215972
(43) Veröffentlichungstag der Anmeldung: 28.07.2021
(73) Patentinhaber: Fraunhofer-Gesellschaft zur Förderung der angewandten Forschung e.V., 80686 München (DE)
(72) Erfinder: WÖSTMANN, Franz-Josef, 28359 Bremen (DE); HEUSER, Michael, 28359 Bremen (DE); BUSSE, Matthias, 28359 Bremen (DE); STUMM, Lukas, 28359 Bremen (DE)
(74) Vertreter: Pfenning, Meinig & Partner mbB
(86) Internationale Anmeldenummer: PCT/EP2019/075165
(87) Internationale Veröffentlichungsnummer: WO 2020/058400

(56) Entgegenhaltungen:
- DE-A1- 102010 020 897
- DE-A1- 102012 212 637
- DE-A1- 102014 222 468
- JP-A- 2015 002 614
- GRONINGER M ET AL: "Casting production of coils for electrical machines", ELECTRIC DRIVES PRODUCTION CONFERENCE (EDPC), 2011 1ST INTERNATIONAL, IEEE, 28 September 2011 (2011-09-28), pages 159 - 161, XP032000385, ISBN: 978-1-4577-1371-2, DOI: 10.1109/EDPC.2011.6085534

## Beschreibung

Bei elektrischen Maschinen kommen gewickelte Spulen zum Einsatz. Die so hergestellten Spulen füllen den zur Verfügung stehenden Bauraum nur anteilig aus. Daraus resultiert eine geringere Leistungs- bzw. Drehmomentdichte der elektrischen Maschinen bezogen auf das Gewicht oder den Bauraum.

Gegossene Al- und Cu-Spulen können diesen Nachteil ausgleichen, jedoch sind bisher keine serientauglichen Verfahren zur Herstellung von gegossenen Al- und Cu-Spulen oder gegossenen Spulen aus Al- und Cu-Legierungen in Dauerformen mit ausreichenden Standzeiten bekannt.

Zur Steigerung der Leistungsdichte oder der Drehmomentdichte elektrischer Maschinen werden bisher aufwändige, oftmals manuell hergestellte Spulen gewickelt, um den Füllgrad noch geringfügig gegenüber Serienverfahren zu verbessern. Über der Höhe der Wicklungen wird dabei Draht mit gleichem Querschnitt verwendet. Dabei verschlechtern bei konventionellen elektrischen Maschinen die von innen nach außen aufeinanderliegenden Windungen der Spule die Wärmeabfuhr und führen zu stärkerer Erwärmung der Spulen und damit zu einer notwendigen Begrenzung der maximalen Stromdichte bezogen auf den Querschnitt der Wicklung.

Gegossene Al- und Cu-Spulen oder gegossene Spulen aus AI und Cu-Legierungen sind an sich bekannt, werden jedoch bisher nicht in Dauerformen, sondern in verlorenen Form wie z.B. im Feinguss oder in einem Lost-Foam-Verfahren oder durch den Einsatz von Salzkernen, die die Kontur vorgeben und den direkten Kontakt der Schmelze mit dem Werkzeug verhindern, hergestellt.

Für die Herstellung verschiedenster Geometrien wird nach dem Stand der Technik eine konturgebende Form eingesetzt. Bei komplexen Geometrien werden ergänzend zu der Form, die über eine oder mehrere Teilungen für eine einfache Gussteilentnahme verfügt, Kerne eingelegt oder Schieber verwendet.

Bei der Herstellung von Kupferbauteilen ergeben sich dabei durch die hohe Gießtemperatur, oberhalb von 1100°C, erhöhte Anforderungen an Werkzeug und Kern. Die thermische Beanspruchung und insbesondere der Temperaturschock während der Formfüllung sorgen für eine schnelle Alterung und Schädigung konventioneller Materialien. Diese Alterung äußert sich durch Auswaschungen und Risse im Werkzeug bzw. Kern. Diese Risse zeichnen sich wiederum durch erhabene Grate auf der Oberfläche der abgegossenen Bauteile ab. Als Folgedavon wird die Werkzeugstandzeit sehr kurz, die Bauteilqualität stark beeinträchtigt und erhebliche Nacharbeit notwendig. Insgesamt sind mit konventionellen Werkzeugstählen kaum wirtschaftliche Resultate zu erzielen.

Bisherige Werkzeugkonzepte führten stets zu geometrisch komplexen Dauerformen oder zum zusätzlichen Einsatz von beweglichen permanenten oder nicht permanenten, als verlorenen, Schiebern oder Kernen. Diese Formen konnten lediglich im Laborbetrieb eingesetzt werden, weil ein großer Aufwand für Wartung der Formen erforderlich war und zusätzlich hohe Ausschussquoten vorlagen.

Aus der Druckschrift EP 2 819 276 A2 ist eine geometrisch abgewandelte Modellgeometrie bekannt, die eine einfach geformte zweigeteilte Dauerform, beispielsweise für einen Druckgießprozess, ermöglicht. Dies wird dadurch erreicht, dass die Windungen jeweils um 180° verdreht und somit die geometrische Komplexität der Spule erheblich reduziert wird. Hier ist jedoch nach der gießtechnischen Herstellung höchst komplexer umformender Prozessschritt erforderlich, um zur Spulengeometrie im Einbauzustand zu gelangen. Die geometrische Vereinfachung wird somit durch einen weiteren nachgelagerten aufwändigen Prozessschritt teuer erkauft.

Die Druckschrift DE 10 2012 212 637 A1 zeigt eine Spule für eine elektrische Einrichtung, insbesondere elektrische Maschine zum Anordnen um wenigstens einen ein magnetisches Feld führenden ersten Kern mit einer in Richtung des magnetischen Feldes verlaufenden Spulenlängsachse, wobei die Spule mehrere, aus einem elektrisch leitfähigen Spulenmaterial gegossene Windungen aufweist und die Windungen und/oder Windungsabschnitte abhängig ihrer Position in Spulenlängsrichtung Querschnittsflächen unterschiedlicher Größen und/oder unterschiedlicher Formen aufweisen.

Das Dokument "Casting production of coils for electrical machines", von M. Gröninger et al., ELECTRIC DRIVES PRODUCTION CONFERENCE (EDPC), 2011 1ST INTERNATIONAL, IEEE, 28. September 2011, bezieht sich auf die gießtechnische Herstellung von Spulen.

Die Druckschrift DE 10 2010 020897 A1 bezieht sich auf ein Verfahren zum Herstellen einer elektrotechnischen Spule mit einer oder mehreren Wicklung(en), wobei eine eine Spulengeometrie enthaltende Negativform, insbesondere eine verlorene Form oder eine Dauerform, bereitgestellt oder hergestellt wird, wobei ein zur Ausbildung der Wicklung(en) geeignetes Spulenmaterial, insbesondere ein elektrisch leitfähiges Metall, in flüssiger Form in diese Negativform gegossen wird, und wobei dieses Spulenmaterial erstarrt wird und/oder man dieses Spulenmaterial unter kontrollierte Bedingungen erstarren lässt.

Der Erfindung liegt die Aufgabe zugrunde, die beschriebenen Schwierigkeiten und Nachteile zu überwinden und ein serientaugliches Verfahren vorzuschlagen, mit dem sich Spulen gewünschten Geometrie, die einen Bauraum möglichst gut ausnutzen sollen, mit möglichst geringem Aufwand herstellen lassen. Der Erfindung liegt ferner die Aufgabe zugrunde, eine einfach und mit geringem Aufwand herstellbare Spule anzubieten, die mit vergleichsweise geringem Bauraum auskommt, und ein geeignetes Werkzeug zur Herstellung einer solchen Spule bzw. zur Durchführung eines entsprechenden Herstellungsverfahrens vorzuschlagen.

Diese Aufgabe wird gelöst durch ein Verfahren gemäß Anspruch 1 oder durch ein Gießwerkzeug gemäß Anspruch 13. Vorteilhafte Ausgestaltungen und Weiterentwicklungen der Erfindung ergeben sich mit den Merkmalen der Unteransprüche.

Bei dem vorgeschlagenen Verfahren zum Herstellen einer Spule wird zunächst ein Halbzeug in Gestalt eines länglichen Leiters durch Gießen in einer Kavität eines Gießwerkzeugs gebildet und die Spule anschließend nach einem Entformen des Halbzeugs durch Umformen dieses Halbzeugs gebildet. Erfindungsgemäß ist die Kavität des Gießwerkzeugs dabei so geformt, dass die Gestalt des Halbzeugs ableitbar ist aus einer Form der fertigen Spule durch Strecken entlang einer Längsachse der Spule und/oder durch Krümmen dieser Längsachse. Beim Umformen zur Bildung der Spule wird das Halbzeug dementsprechend so umgebogen und gestaucht, dass bereits in dem Halbzeug vorliegende Windungen der Spule beim Umformen zumindest bereichsweise einander angenähert und in eine Anordnung entlang der Längsachse der fertigen Spule gebracht werden, wobei der Leiter beim Umformen in einem Verlauf jeder einzelnen der Windungen um nicht mehr als einen rechten Winkel verdreht oder umgebogen wird.

Vorteile dieses Verfahrens ergeben sich dabei einerseits durch die vorzugsweise hinterschnittfreie Gestalt des gegossenen Halbzeugs, die einen einfachen Aufbau des Gießwerkzeugs ohne verlorene Werkzeugteile möglich macht und das Entformen einfach macht und andererseits durch die verhältnismäßig unkomplizierte Umformung, durch die dieses Halbzeug in die Form der fertigen Spule überführt wird.

Das Halbzeug wird dabei in Form einer Rosette gebildet, so dass die Windungen vor dem Umformen um ein Zentrum herum aufgefächert angeordnet sind. Dabei kann die der Gestalt des Halbzeugs entsprechende Kavität des Gießwerkzeugs beim Gießen des Halbzeugs vom Zentrum aus gefüllt werden, so dass ein Anguss oder mehrere Angüsse mittig in der Rosette gebildet wird werden. Dadurch ergeben sich vorteilhaft kurze Fließwege für das das Halbzeug bzw. den Leiter der Spule bildende Material. Insbesondere kann die Kavität des Gießwerkzeugs beim Bilden des Halbzeugs von unten zentral gefüllt werden.

Die Kavität kann bei besonders einfachen Ausführungen durch nur zwei Werkzeughälften des Gießwerkzeugs gebildet werden. Das Halbzeug kann durch Trennen der Werkzeughälften in eine Richtung, in der das Halbzeug hinterschnittfrei ist, vorzugsweise in Richtung einer Achse der Rosette, entformt werden. Dabei sind typischerweise keine zusätzlichen Formkerne, Schieber oder verlorene Formteile notwendig. In jedem Fall kann es sich bei dem Gießwerkzeug um eine wiederholt verwendbare Dauerform handeln, weshalb das Verfahren wirtschaftlich realisiert werden kann und serientauglich ist.

Das zum Gießen des Halbzeugs und zum Bilden des Leiters verwendete Material wird typischerweise ein Metall guter Leitfähigkeit sein. Insbesondere kann das Halbzeug aus Aluminium oder Kupfer oder einer Aluminium oder Kupfer enthaltenden Legierung gebildet werden.

Zum Bilden der Spule wird das Halbzeug typischerweise plastisch umgeformt, vorzugsweise ohne Aufschmelzen des das Halbzeug bildenden Materials.

Die Windungen können zum Umformen des Halbzeugs über einen Führungsstab oder Dorn geschoben werden, an dessen Ende eine Schulter angeordnet sein kann, die als Stopp für eine erste Windung dienen kann. Hinter der so entstehenden Spule kann ein weiteres Werkzeugteil auf den Führungsstab bzw. Dorn geschoben werden, mit dessen Hilfe die Windungen zusammengedrückt werden können.

Typischerweise wird der Leiter mit einem flachen Querschnitt gebildet, der in Richtung der Längsachse der Spule einen kleineren Durchmesser und in einer Richtung senkrecht zur Längsachse der Spule einen größeren Durchmesser hat. Damit lässt sich ein besonders platzsparender Aufbau der Spule erreichen.

Dementsprechend vorteilhaft ist eine durch ein Verfahren beschriebener Art hergestellte Spule. Solche Spulen eignen sich zur Verwendung in elektrischen Maschinen, insbesondere Elektromotoren. Die Vorteile der so hergestellten Spule kommen besonders bei Anwendungen zum Tragen, in denen es auf eine platz- und gewichtssparende Ausführung ankommt, beispielsweise in Elektromotoren in Luftfahrzeugen, wo entsprechend ausgestattete Elektromotoren z.B. als Antrieb für Ruder, Klappen oder Fahrwerksteile verwendet werden können.

Ein zur Durchführung des beschriebenen Verfahrens und zur Herstellung einer entsprechenden Spule bzw. eines entsprechenden Halbzeugs geeignetes Gießwerkzeug umfasst zwei Werkzeughälften, die eine in eine Entformungsrichtung hinterschnittfreie Kavität umschließen, wobei die Kavität eine Folge von Windungen bildet, die in Form einer Rosette um ein Zentrum herum aufgefächert angeordnet sind, wobei die Entformungsrichtung einer Richtung einer Achse der Rosette entspricht. Vorzugsweise ist dieses Gießwerkzeug zum Füllen der Kavität vom Zentrum aus eingerichtet.

Ausführungsbeispiele der Erfindung werden nachfolgend mit Bezugnahme auf die Figuren erläutert.

Es zeigt
Fig. 1 Eine frontale Ansicht einer zwei Werkzeughälften eines Gießwerkzeugs,
Fig. 2 eine perspektivische Darstellung dieses Gießwerkzeugs mit beiden Werkzeughälften in einem geschlossenen Zustand,
Fig. 3 in perspektivischer Darstellung ein in diesem Gießwerkzeug durch Gießen hergestelltes Halbzeug,
Fig. 4 eine Aufsicht auf dieses Halbzeug,
Fig. 5 jeweils in perspektivischer Darstellung zwei Teile eines Umformwerkzeugs und eine aus dem Halbzeug entstehende Spule in drei aufeinanderfolgenden Stadien eines Umformprozesses, und zwar links im Bild in auseinandergezogener Darstellung jeweils einzeln und rechts im Bild mit auf einem Führungsstab oder Dorn aufgeschobenen Windungen des Halbzeugs bzw. der entstehenden Spule, und
Fig. 6 ebenfalls in perspektivischer Darstellung eine Variante des Umformwerkzeugs, bei der der Führungsstab oder Dorn gekrümmt ausgeführt ist.

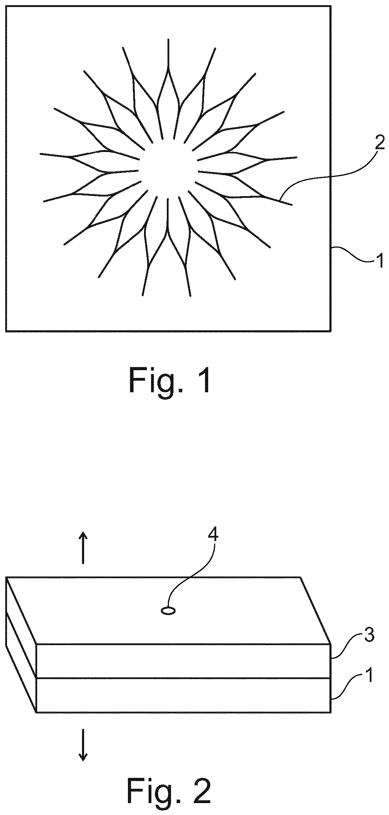

In Fig. 1 ist eine untere Werkzeughälfte 1 eines Gießwerkzeugs gezeigt. Erkennbar ist eine rosettenförmige Kavität 2 dieses Gießwerkzeugs, die sich durch Verbinden der unteren Werkzeughälfte 1 mit einer oberen Werkzeughälfte 3 schließen lässt.

Das vollständige geschlossene Gießwerkzeug ist in Fig. 2 erkennbar. Dort ist auch eine Einlassöffnung 4 gezeigt, durch die die Kavität 2 gefüllt werden kann, und zwar von einem Zentrum einer durch die Kavität gebildeten Rosette aus. Bei dieser Gießform handelt es sich um eine mehrfach verwendbare Dauerform.

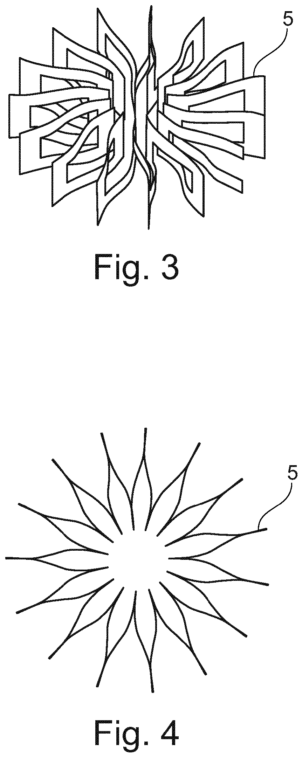

In den Figuren 3 und 4 ist ein durch Gießen in diesem Gießwerkzeug gebildetes Halbzeug 5 gezeigt, das aus Aluminium, Kupfer oder einer Aluminium oder Kupfer enthaltenden Legierung gebildet sein kann. Bei dem Halbzeug 5 handelt es sich um einen länglichen Leiter, der bereits Windungen einer später daraus gebildeten Spule bildet. Dabei wird das Halbzeug 5 entsprechend der Form der Kavität 2 in Form einer Rosette gebildet, so dass die Windungen um das Zentrum herum aufgefächert angeordnet sind. Das in den Figuren 3 und 4 gezeigte Halbzeug 5 ist in Richtung einer Achse der Rosette hinterschnittfrei und kann daher entformt werden, indem die Werkzeughälften 1 und 3 nach dem Gießen und Aushärten des Halbzeugs 5 in Richtung dieser Achse voneinander getrennt werden. Diese Richtung ist in Fig. 2 durch zwei Pfeile veranschaulicht. Dabei benötigt die Gießform weder einen Formkern noch irgendwelche Schieber oder verlorene Formteile.

Das Halbzeug 5 wird - ohne Aufschmelzen des das Halbzeug bzw. den Leiter bildenden Materials - plastisch umgeformt, um die bereits erwähnte Spule 6 zu bilden. Dazu wird das Halbzeug 5 so umgebogen und gestaucht, dass die Windungen der entstehenden Spule 6 beim Umformen aufeinander zubewegt werden, also einander angenähert werden, und in eine Anordnung entlang einer Längsachse der fertigen Spule 6 gebracht werden. Dabei wird der Leiter in einem Verlauf jeder einzelnen der Windungen um nicht mehr als etwa 20° verdreht und umgebogen. Das ist möglich, weil die Kavität 2 des Gießwerkzeugs so geformt, dass die Gestalt des darin gebildeten Halbzeugs 5 ableitbar ist aus der späteren Form der fertigen Spule 6 durch Strecken entlang der Längsachse der Spule 6 und durch Krümmen dieser Längsachse.

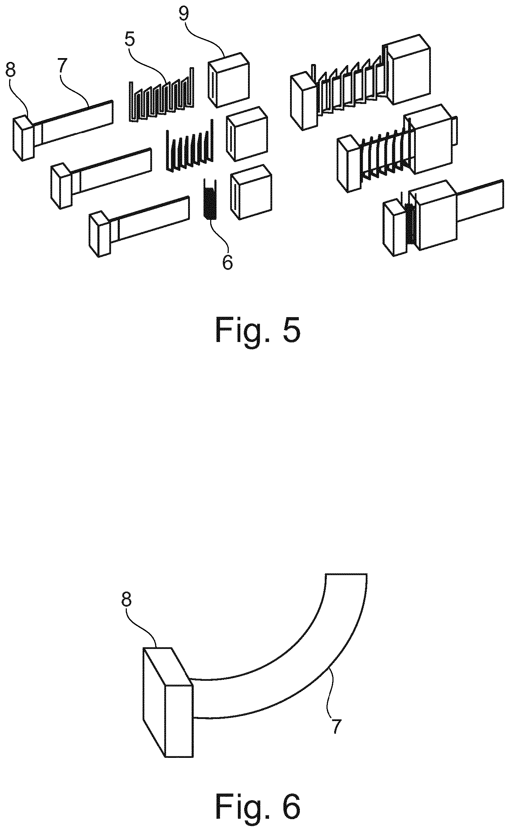

Wie in Fig. 5 veranschaulicht ist, kann das Umformen des Halbzeugs 5 zur Bildung der Spule 6 mittels eines Umformwerkzeugs erfolgen, dass einen Führungsstab oder Dorn 7 aufweist, an dessen Ende eine Schulter 8 angeordnet ist. Die Windungen des Halbzeugs 5 können zum Umformen über diesen Führungsstab oder Dorn 7 geschoben werden, der dazu in die Windungen eingefädelt wird. Die Schulter 8 dient dabei für eine erste Windung. Hinter dem Halbzeug 5, aus dem so die Spule 6 gebildet wird, kann ein weiteres Werkzeugteil 9 auf den Führungsstab bzw. Dorn 7 geschoben werden, um die Windungen zusammenzudrücken und der Spule 6 ihre endgültige Gestalt zu geben, in der sie nur ein ausgesprochen geringes Volumen ausfüllt.

In Fig. 5 ist das Halbzeug 5 bereits in einer geradegebogenen Form gezeigt, in der die Rosette aufgebogen ist und die Windungen entlang der Längsachse der Spule 6 angeordnet sind und miteinander fluchten. Eine Abwandlung des Umformwerkzeugs, mit dem das Geradebiegen des Halbzeugs 5 bzw. der Rosette vereinfacht und beim Zusammendrücken der Windungen vollendet werden kann, ist in Fig. 6 gezeigt. Der Führungsstab oder Dorn 7 ist bei dieser Abwandlung gekrümmt ausgeführt.

Der zunächst das Halbzeug 5 und später die Spule 6 bildende Leiter hat einen flachen Querschnitt gebildet, der in Richtung der Längsachse der Spule 6 einen kleineren Durchmesser und in einer Richtung senkrecht zur Längsachse einen größeren Durchmesser hat.

Die Spule 6 kann in einer elektrischen Maschine, beispielsweise einem Elektromotor, verwendet werden. Ein solcher Elektromotor kann in einem Luftfahrzeug verwendet werden, z.B. als Antrieb für ein Ruder, eine Klappe oder ein Einziehfahrwerk.

Aufgrund der typischerweise symmetrischen Anordnung des Gussteils, im Fall es beschriebenen Ausführungsbeispiels also des Halbzeugs 5, kann die Herstellung auch im Schleuderguss erfolgen. Für eine Mehrfachbelegung können mehrere Kavitäten hintereinander angeordnet werden.

Bei einer konventionellen Vorgehensweise mit zwei Formhälften kann im Niederdruckguss die Kavität von unten zentral gefüllt werden und der Anschnitt mechanisch geschlossen oder durch eine entsprechend dünnwandige Gestaltung und/oder Temperierung im Anschnittbereich zu einer schnellen Erstarrung gebracht werden, um einen Verschluss im Anschnittbereich zu erreichen. Im Anschluss kann von oben ein Stempel in das noch schmelzflüssige Zentrum eingeführt werden und unter dem Druck des Stempels ein Nachspeisen der Kontur erzielt werden. Dann wird die laminare Formfüllung des Niederdruckgusses mit einer druckunterstützten Nachspeisung, also einem Druckguss, kombiniert.

Das Gießwerk kann so gestaltet sein, dass das Zentrum der Kavität aus einem Tigel besteht, in den ein metallisches Granulat eingefüllt wird, welches induktiv aufgeschmolzen wird. Nach dem Aufschmelzen des Tiegels kann
- die Form und der Tigel in Rotation versetzt werden, wobei durch die Fliehkraft und entsprechende Tigelgestaltung die Schmelze über den Tigelrand in die Kavität gedrückt wird, oder
- ein Stempel mit Aussparungen für die Anschnittbereiche von oben in die Form hineingefahren und dabei die Tigelwandung nach unten gedrückt werden. Der Boden des Tigels bleibt dabei in seiner Position. Durch das Hinunterdrücken der Tigelwandung werden die Anschnitte der zu gießenden Kontur freigelegt und die im Tigel befindliche Schmelze durch die den Anschnitten entsprechenden Öffnungen des Stempels in die Kavität gepresst.

Mit der vorliegend anhand verschiedener Ausführungsbeispiele beschriebenen Erfindung wird eine Methodik zur Reduzierung der Komplexität von Spulen in ihrer Herstellung vorgeschlagen, wodurch diese in geometrisch einfachen zweigeteilten Dauerformen herstellbar werden. Dies wird durch eine Kombination aus Gießprozess und anschließender plastischer Vorverformung der Spule erreicht, die den Herstellungsprozess erheblich erleichtert. Damit wird die Geometrie der Spule zur Werkzeukonstruktion quasi virtuell auseinandergezogen und kreisförmig angeordnet (rosettenartig), um eine Geometrie zu realisieren, die frei von Hinterschnitten ist und in einem zweiteiligen Werkzeug eingelegt werden kann, wie in den Figuren 1 bis 4 veranschaulicht ist.

Nach dem Gießprozess wird die Spule erneut plastisch verformt, um den geometrischen Einbauzustand zu erhalten. Der Anguss wird bei der Geometrie in der Mitte angeordnet, wodurch sich eine symmetrische Formfüllung und kürzestmögliche Fließwege ergeben. Ebenso wie in dem in den Figuren illustrierten Fall, in dem die Verformung über die Längsseite der Spule erfolgt, ist auch eine Verformung über die kurze Seite, den Wickelkopf möglich. Die Geometrie kann dabei in verschiedenen Gießverfahren zum Einsatz kommen, insbesondere Schwerkraftsandguss, Niederdrucksandguss, Schwerkraftkokillenguss, Niederdruckkokillenguss und auch Druckguss, bei Einsatz eines Zentralangusse. Ebenso kann in der Abwicklung ein Modell für den Feinguss aus Wachs oder Kunststoff gespritzt und für den Lost Foam-Prozess geschäumt werden. Weiterhin kann aufgrund der zentralen Anordnung des Angusses ein Stapelguss realisiert werden, bei dem in allen genannten Verfahren mehrere Spulenwerkzeug übereinander gestapelt und in einem Abguss abgegossen werden können. Die Werkzeugeinsätze können dabei aus konventionellen Werkzeugmaterialien sein, oder speziell für die hohe Temperaturbelastung bei der Verarbeitung von Kupfer und dem starken werkzeugangriff bei der Verwendung von Aluminium aus keramischen Materialien.

Die hier beschriebe Herstellung einer Spule zeichnet sich durch die einfache Werkzeuggeometrie, die damit mögliche einfache Herstellung eines Halbzeuges für die Spule und die einfache anschließende Nacharbeit aus. Für die Handlingsprozesse kann dabei der Angussbereich genutzt werden. Der Anguss versteift die Spulengeometrie und kann nach den wesentlichen Folgeprozessen entfernt werden. Bei optimaler Lage der Anschnitte, z.B. in der Mitte der Windung oder am Rand, kann der Anschnitt als letzter Schritt vor dem Umformen entfernt werden und ein evtl. verbleibender Grat toleriert werden. Ebenso kann die gesamte Formgeometrie so ausgelegt sein, dass mögliche Grate toleriert werden können, um die Fertigung zu vereinfachen. Dazu kann das Gießwerkzeug z.B. so ausgelegt werden, dass die durch das Entformen entstehenden Grate bei der fertigen Spule jeweils in dafür vorgesehenen Aushöhlungen an einer Oberfläche einer benachbarten Windung zu liegen kommen.

Nach der Herstellung der abgewickelten Geometrie werden diese weiteren Prozessschritten, wie Entgraten, Polieren, Reinigen, Schleifen, Beschichten, zugeführt. Hierbei erweist sich die Geometrie durch die bessere Zugänglichkeit aufgrund der vorverformten Spule als positiv. Für ein notwendiges Handling des Halbzeuges können im Herstellungsprozess Positionier-, Fixier-, Handlingshilfen etc. mit in der Werkzeugkontur vorgesehen werden, die je nach Bedarf entfernt oder zur Weiterverarbeitung genutzt werden können. Der zweite entscheidende Vorteil dieser Geometrievariante ist der einfache Umformprozess nach dem Gießen durch Einschieben eines Führungsstabes in die Seele der Windung und direktem Umformen der Windungen aufeinander.

Dies wird durch das Einfädeln auf einen Dorn mit Schulter erreicht, so wie in den Figuren 5 und 6 dargestellt. Mithilfe dieser Konstruktion wird die Spule in den Einbauzustand zurück verformt bzw. gebracht. Hierbei kann Umformprozess und Kalibrierung kombiniert werden. Der Führungsstab kann am Anfangsende dünn ausgeführt sein zur Vereinfachung des Einfädelns und wird dann zur druck aufbringen Auflagefläche - also der Schulter 8 - hin dicker und entspricht dort der Endkontur des Innenraums der Windung. Idealerweise hat die Endkontur des Innenraums mindestens die gleiche Höhe wie die zu erzielende Gesamtspule, siehe Figuren 5 und 6.

Eine Verwendung des hier vorgeschlagenen Herstellungsverfahrens lässt sich auch am fertigen Erzeugnis noch nachweisen. So geben einfache visuelle Untersuchungen der Gusskörper und eine metallographische Analyse Aufschluss über die fertigungsbedingte Historie der Gussteile. Insbesondere die plastisch umgeformten Bereiche in Windung und Wickelkopf können metallographisch nachgewiesen werden.

## Patentansprüche

1. Verfahren zum Herstellen einer Spule (6), bei dem durch Gießen ein Halbzeug (5) in Gestalt eines länglichen Leiters in einer Kavität (2) eines Gießwerkzeugs gebildet wird und die Spule (6) nach einem Entformen des Halbzeugs (5) durch Umformen dieses Halbzeugs (5) gebildet wird,
wobei die Gestalt des Halbzeugs (5) ableitbar ist aus einer Form der fertigen Spule (6) durch Strecken entlang einer Längsachse der Spule (6) und/oder durch Krümmen dieser Längsachse,
wobei das Halbzeug (5) beim Umformen so umgebogen und gestaucht wird, dass bereits in dem Halbzeug (5) vorliegende Windungen der Spule (5) beim Umformen zumindest bereichsweise einander angenähert und in eine Anordnung entlang der Längsachse der fertigen Spule (6) gebracht werden, wobei der Leiter beim Umformen in einem Verlauf jeder einzelnen der Windungen um nicht mehr als einen rechten Winkel verdreht oder umgebogen wird,
wobei das Halbzeug (5) in Form einer Rosette gebildet wird, so dass die Windungen vor dem Umformen um ein Zentrum herum aufgefächert angeordnet sind.

2. Verfahren nach Anspruch 1, **dadurch gekennzeichnet, dass** beim Gießen des Halbzeugs (5) die der Gestalt des Halbzeugs (5) entsprechende Kavität (2) des Gießwerkzeugs vom Zentrum aus gefüllt wird.

3. Verfahren nach einem der Ansprüche 1 oder 2, **dadurch gekennzeichnet, dass** die Kavität (2) durch zwei Werkzeughälften (1,3) des Gießwerkzeugs gebildet wird und das Halbzeug (5) durch Trennen dieser Werkzeughälften (1, 3) in eine Richtung, in der das Halbzeug (5) hinterschnittfrei ist, entformt wird.

4. Verfahren nach einem der Ansprüche 1 bis 3, **dadurch gekennzeichnet, dass** das Gießwerkzeug eine Dauerform ist.

5. Verfahren nach einem der Ansprüche 1 bis 4, **dadurch gekennzeichnet, dass** das Halbzeug (5) aus Aluminium oder Kupfer oder einer Aluminium oder Kupfer enthaltenden Legierung gebildet wird.

6. Verfahren nach einem der Ansprüche 1 bis 5, **dadurch gekennzeichnet, dass** das Halbzeug (5) zum Bilden der Spule (6) plastisch umgeformt wird.

7. Verfahren nach einem der Ansprüche 1 bis 6, **dadurch gekennzeichnet, dass** die Windungen zum Umformen des Halbzeugs (5) über einen Führungsstab oder Dorn (7) geschoben werden.

8. Verfahren nach einem der Ansprüche 1 bis 7, **dadurch gekennzeichnet, dass** der Leiter einen flachen Querschnitt hat, der in Richtung der Längsachse der Spule (6) einen kleineren Durchmesser und in einer Richtung senkrecht zur Längsachse der Spule (6) einen größeren Durchmesser hat.

9. Verfahren nach einem der Ansprüche 1 bis 8, **dadurch gekennzeichnet, dass** das Gießen des Halbzeugs (5) in einem Niederdruck- und/oder Hochdruckgussverfahren und/oder in einem Schleuderguss- oder Schwerkraftgussverfahren erfolgt.

10. Verfahren nach einem der Ansprüche 1 bis 9, **dadurch gekennzeichnet, dass** beim Bilden des Halbzeugs (5) nach einem ersten Befüllen der Kavität (2) unter einem niedrigeren ersten Druck ein Anschnitt des Gießwerkzeugs mechanisch oder durch beschleunigtes Erstarren in einem Ansschnittbereich geschlossen wird und/oder ein Stempel in ein noch schmelzflüssig gefülltes Zentrum des Gießwerkzeugs eingeführt und die Kavität (2) unter einem durch den Stempel erzeugten höheren zweiten Druck nachgespeist wird.

11. Verfahren nach einem der Ansprüche 1 bis 10, **dadurch gekennzeichnet, dass** ein zentral im Gießwerkzeug angeordneter Tigel mit einem metallischen Granulat gefüllt wird, das dort aufgeschmolzen wird und zum Füllen der mit dem Tigel verbundenen Kavität (2) verwendet wird.

12. Verfahren nach Anspruch 11, **dadurch gekennzeichnet, dass** das Granulat im Tigel induktiv aufgeschmolzen wird und/oder durch Rotation des Tigels oder durch einen Druck eines Stempels in die Kavität (2) gedrückt wird.

13. Gießwerkzeug zur Durchführung eines Verfahrens nach einem der Ansprüche 1 bis 12 umfassend zwei Werkzeughälften (1, 3), die eine in eine Entformungsrichtung hinterschnittfreie Kavität (2) umschließen, wobei die Kavität (2) einer Folge von Windungen bildet, die in Form einer Rosette um ein Zentrum herum aufgefächert angeordnet sind, wobei die Entformungsrichtung einer Richtung einer Achse der Rosette entspricht.

## Claims

1. A method for producing a coil (6), in which, by way of casting, a semi-finished product (5) in the form of an elongate conductor is formed in a cavity (2) of a casting mould and, following a demoulding of the semi-finished product (5), the coil (6) is formed by reshaping this semi-finished product (5),
wherein the form of the semi-finished product (5) is derivable from a shape of the finished coil (6) by stretching along a longitudinal axis of the coil (6) and/or by bending this longitudinal axis,
wherein the semi-finished product (5) is bent and compressed during the reshaping, such that turns of the coil (5) already present in the semi-finished product (5) are brought closer towards one another, at least in regions, during the reshaping and are brought into an arrangement along the longitudinal axis of the finished coil (6), wherein the conductor, during the reshaping, is twisted or bent by no more than a right angle in a course of each individual turn,
wherein the semi-finished product (5) is formed as a rosette, so that the turns are arranged fanned out around a centre prior to the reshaping.

2. The method according to claim 1, **characterised in that**, during the casting of the semi-finished product (5), the cavity (2) corresponding to the shape of the semi-finished product (5) is filled out from the centre.

3. The method according to any one of claims 1 or 2, **characterized in that** the cavity (2) is formed by two mould halves (1, 3) of the casting mould and the semi-finished product (5) is demoulded by separating these mould halves (1, 3) in a direction in which the semi-finished product (5) is free from undercuts.

4. The method according to any one of claims 1 to 3, **characterised in that** the casting mould is a permanent mould.

5. The method according to any one of claims 1 to 4, **characterised in that** the semi-finished product (5) is formed from aluminium or copper or an alloy that contains aluminium or copper.

6. The method according to any of claims 1 to 5, **characterised in that** the semi-finished product (5) is plastically reshaped to form the coil (6).

7. The method according to any one of claims 1 to 6, **characterised in that** the turns are slid over a guide rod or mandrel (7) to reshape the semi-finished product (5).

8. The method according to any one of claims 1 to 7, **characterised in that** the conductor has a flat cross-section, which in the direction of the longitudinal axis of the coil (6) has a smaller diameter and in a direction perpendicular to the longitudinal axis of the coil (6) has a larger diameter.

9. The method according to any one of claims 1 to 8, **characterised in that** the semi-finished product (5) is cast in a low-pressure and/or highpressure casting method and/or in a centrifugal casting or gravity casting method.

10. The method according to any one of claims 1 to 9, **characterised in that**, when forming the semi-finished product (5), following a first filling of the cavity (2) at a lower first pressure, a gate of the casting mould is closed mechanically or by accelerated solidification in a gate region and/or a ram is introduced into a centre of the casting mould that is still filled with molten liquid and the cavity (2) is topped up under a higher second pressure generated by the ram.

11. The method according to any one of claims 1 to 10, **characterised in that** a crucible arranged centrally in the casting mould is filled with a metal granular material, which is melted there and is used to fill the cavity (2) connected to the crucible.

12. The method according to claim 11, **characterised in that** the granular material is inductively melted in the crucible and/or is pressed into the cavity (2) by rotation of the crucible or by a pressure of a ram.

13. A casting mould for carrying out a method according to any one of claims 1 to 12, comprising two mould halves (1, 3), which enclose a cavity (2) which is free from undercuts in a demoulding direction, wherein the cavity (2) forms a sequence of turns which are arranged fanned out in the form of a rosette around a centre, wherein the demoulding direction corresponds to a direction of an axis of the rosette.

## Revendications

1. Procédé de fabrication d'une bobine (6), dans lequel un produit semi-fini (5) est formé par coulée dans une cavité (2) d'un outil de coulée afin d'obtenir une forme de conducteur allongé et la bobine (6) est formée par déformation du produit semi-fini (5) après démoulage du dit produit semi-fini (5),
dans lequel la forme du produit semi-fini (5) peut être dérivée d'une forme de la bobine (6) terminée, grâce à un étirement le long d'un axe longitudinal de la bobine (6) et/ou grâce à un cintrage du dit axe longitudinal,
dans lequel le produit semi-fini (5) est plié et comprimé lors du formage de sorte que des enroulements de la bobine (5) déjà présents dans le produit semi-fini (5) sont rapprochés les uns des autres au moins par endroits lors du formage et sont agencés le long de l'axe longitudinal de la bobine (6) terminée, dans lequel, lors du formage et tout au long de chacun des enroulements, le conducteur n'est pas tordu ou plié au-delà d'un angle droit,
dans lequel le produit semi-fini (5) est formé de manière à prendre la forme d'une rosette, de sorte que les enroulements sont agencés en éventail autour d'un centre avant le formage.

2. Procédé selon la revendication 1, **caractérisé en ce que**, lors de la coulée du produit semi-fini (5), la cavité (2) de l'outil de coulée correspondant à la forme du produit semi-fini (5) est remplie à partir du centre.

3. Procédé selon l'une quelconque des revendications 1 ou 2, **caractérisé en ce que** la cavité (2) est formée grâce à deux moitiés d'outil (1, 3) de l'outil de coulée et le produit semi-fini (5) est démoulé par séparation des dites moitiés d'outil (1, 3) dans une direction dans laquelle le produit semi-fini (5) est exempt de contre-dépouille.

4. Procédé selon l'une quelconque des revendications 1 à 3, **caractérisé en ce que** l'outil de coulée se présente sous une forme réutilisable.

5. Procédé selon l'une quelconque des revendications 1 à 4, **caractérisé en ce que** le produit semi-fini (5) est formé à partir d'aluminium ou de cuivre ou d'un alliage contenant de l'aluminium ou du cuivre.

6. Procédé selon l'une quelconque des revendications 1 à 5, **caractérisé en ce que** le produit semi-fini (5) est déformé de manière plastique afin de former la bobine (6).

7. Procédé selon l'une quelconque des revendications 1 à 6, **caractérisé en ce que** les enroulements sont poussés sur une tige de guidage ou un mandrin (7) afin de déformer le produit semi-fini (5).

8. Procédé selon l'une quelconque des revendications 1 à 7, **caractérisé en ce que** le conducteur présente une section transversale plate qui présente un diamètre plus petit dans le sens de l'axe longitudinal de la bobine (6) et un diamètre plus grand dans un sens perpendiculaire à l'axe longitudinal de la bobine (6).

9. Procédé selon l'une quelconque des revendications 1 à 8, **caractérisé en ce que** la coulée du produit semi-fini (5) est mise en œuvre selon un procédé de coulée à basse pression et/ou à haute pression et/ou selon un procédé de coulée par centrifugation ou par gravité.

10. Procédé selon l'une quelconque des revendications 1 à 9, **caractérisé en ce que**, lors de la formation du produit semi-fini (5) et après un premier remplissage de la cavité (2) sous une première pression inférieure, une porte de l'outil de coulée est fermée de manière mécanique ou par solidification accélérée dans une région de porte et/ou un poinçon est introduit au centre de l'outil de coulée qui est encore rempli de fonte liquide et la cavité (2) est remplie à nouveau sous une seconde pression supérieure générée par le poinçon.

11. Procédé selon l'une quelconque des revendications 1 à 10, **caractérisé en ce qu'**un creuset agencé au centre de l'outil de coulée est rempli d'un granulat métallique qui y est fondu et utilisé pour remplir la cavité (2) reliée au creuset.

12. Procédé selon la revendication 11, **caractérisé en ce que** le granulat est fondu par induction dans le creuset et/ou est pressé dans la cavité (2) par rotation du creuset ou par pression d'un poinçon.

13. Outil de coulée destiné à la mise en œuvre d'un procédé selon l'une quelconque des revendications 1 à 12, comprenant deux moitiés d'outil (1, 3) qui entourent une cavité (2) exempte de contre-dépouille dans une direction de démoulage, dans lequel la cavité (2) forme une suite d'enroulements agencés en éventail autour d'un centre de manière à prendre la forme d'une rosette, la direction de démoulage correspondant à une direction d'un axe de la rosette.
